# EUROPEAN PATENT SPECIFICATION

(11) **EP 0 368 369 B1**
(45) Date of publication and mention of the grant of the patent: **27.10.1993**
(21) Application number: 89123622.6
(22) Date of filing: 24.12.1985
(51) Int. Cl.: G01N 23/05

(54) **Radiographic inspection system**
Radiographie-Untersuchungssystem
Système d'inspection radiographique

(43) Date of publication of application: 16.05.1990
(62) Divisional of application: 85116545.6
(73) Proprietor: Loral Vought Systems Corporation, Grand Prairie, Texas 75051 (US)
(72) Inventor: Dance, William E., Dr., Dallas Dallas County Texas 75229 (US); Carollo, Sammy F., Irving Dallas County Texas 75062 (US)
(74) Representative: KUHNEN, WACKER & PARTNER

(56) References cited:
- EP-A- 0 150 863
- GB-A- 2 068 629
- KERNTECHNIK vol. 19, no. 12, December 1977, pages 530-533, München, DE; F.V. FRAZZOLI et al.: "Neutron radiography with Cf 252 and TV imaging techniques"
- NUCLEAR INSTRUMENTS AND METHODS vol. 208, no. 1/3, April 1983, pages 435-438, Amsterdam, NL; W. PRIESKE et al.: "A vidicon camera for real time X-ray diffraction studies on polymers using synchrotron radiation"
- H. BREUER: "DTV-ATLAS ZUR CHEMIE" vol. 1, 2nd edition, 1983, pages 180, 181, Deutscher Taschenbuch Verlag, München, DE

## Description

The present invention relates to radiographic imaging systems and, more particularly, to radiographic apparatus having means for producing images derived from radiaton shadowgraphs derived with the use of neutron radiation sources.

The forming and processing of radiographically produced shadowgraphs or radiation transmisson patterns to produce visual images of a specimen or workpiece is of interest in various applications, such as the radiographic inspection of various structural components. Previously, such inspection techniques entailed the forming of photoshadowgraphs. A photographic film plate was positioned adjacent to an object to be inspected by the neutron source, the object being positioned between the film and the source of radiation. When neutron or radiaton is transmitted through any heterogeneous object, it is differently absorbed, depending upon the varying thickness, density, and chemical composition of the object. The image registered by the emergent rays on a film adjacent to the specimen under examination constitues a shadowgraph, or radiograph, i. e. an intensity pattern of the rays transmitted, of the interior of the specimen.

X-radiation may be used in industrial applications wherein, for example, it is desired to evaluate a metal casting suspected of having internal cracks, separations, voids, or other defects; and it is, of course, employed widely in medical applications. X-rays are, in general, substantially more penetrating than neutron radiation with respect to "low-z" materials such as aluminum, plastic, boron, carbon, and the like. Radiographs produced from neutron radiation are employed, for example, when it is desired to form an image of hydrogenous, or organic materials which may be present within metallic structures. Neutrons penetrate low-thermal-cross-section materials such as lead, aluminum, steel, and titanium, but are absorbed by organic, hydrogenous materials. With respect to metallic structural members, an indication of such hydrogenous materials within the structure may reveal the presence of water, hydroxides, and other corrosion products. Such corrosion may be in the form of intergranular corrosion, with accompanying exfoliation, of materials such as aluminum, and certain other metals. Stresses in aluminum aircraft components, for example, produce internal, intergranular corrosion which is invisible and not accurately imaged by conventional, non-destructive inspection techniques; such corrosion may result in critical failure of major structural elements if it continues undetected. As in the design of load-bearing or structural members for various industrial applications, the conventional design philosophy for aerospace components entails a substantial degree of "over design" for ensuring structural integrity of the components. As will be understood by those in the art, such an excess of material results in correspondingly higher weight and cost, and in lower performance and fuel efficiency than would be obtained if compensation for potantial, undetectable internal deterioration was not necessary. Similarly, the permissible useful life of such components is also based upon safety margins which can be substantially reduced if positive assurance were obtainable that internal, or hidden deterioration had not occurred to a significant degree.

Further difficulties with respect to non-destructive testing of aerospace components relate to the possibilities of surface corrosion on internal components hidden from visual inspection. Corrosion which may occur within honeycomb cell structures or panels may result in the separation of honeycomb cores from outer skin surfaces, and the like.

Prior art devices as summarized in Isotopenpraxis, no. 12, vol. 12, 1976, pages 449-457 are utilizing images produced from low level radiation such as neutron or low level X-radiation by exposing photographic films to the radiation for an appropriate period of time for inspection purposes. The use of photographic film provides the advantage that, through an exposure over an extended period of time, very low levels of radiation may form a satisfactory photoradiograph. Exposure times, film speed, radiation levels and film types may be varied. It will be understood, however, that the delays entailed in setting up such film processing imparts limitations in inspection efficiency, particularly when it is desired to inspect, and reinspect, large components, or large numbers of components. For this reason, modern radiographic inspection systems have employed low-light-level television cameras for producing television images derived from the radiation of specimen, whereby a telvision display corresponding to a radiophotograph is formed. The television monitor may be located in a facility remote from the radiation source, which may afford advantages when hazardous radiation is present. Additionally, television monitoring permits continuous monitoring of a component for real, or "near real time" examination. Such low-light-level telvision cameras may be of the image orthicon type or of other types, and often employ multiple stages of image intensification or amplification. Modern, low-light-level cameras include various refinements and intensification techniques, such as silicon intensified targets (SIT), secondary electron conduction (SEC), charge-storing, and amplifying.

For the detection of neutron radiation, this document proposes a lithium-containing foil in the film cassette.

For studying polymers which are weakly scattering X-ray synchroton radiation Priesce et al. (Nuclear Instruments and Methods, vol. 208, April 1983, no. 1/3, pages 435-438) suggest a Westinghouse vidicon tube containing a converter screen (consisting of a 10 µm thick layer of Gd₂S₂O:Tb or 30 µm ZnS(Ag)) for converting X-radiation in an electron beam and a Si-target, so as to integrate a charge pattern formed on said target by said electron beam for up to 499 TV-frames before it is read out.

Two further general approaches to the formation of television images of irradiated specimens are illustrated in U. S. patents No. 3,280,253 and 3,668,396, of R. C. McMaster et al and J. A. Asars et al, respectively. The system of the McMaster patent employs a single stage camera tube which is sensitive to X-radiation. In use, a radiation source is positioned to direct X-radiation directly toward the television camera tube after transmission through a workpiece to be inspected, and an image is formed on the camera tube target by electrons derived from the X-radiation directed toward the camera; the image is intensified by the use of periodic beam scanning, in which the radiation builds up an adequate image potential (an image pattern comprising a loss of positive charges at portions of a semiconductor target) between raster scanning cycles. A satisfactory TV image is produced by intermittent scanning of the target by the electron beam raster scanner. The McMaster camera includes no intermediate intensifying stages. Such single stage camera tubes provide relatively moderate gain in comparison with highly sensitive tubes such as that disclosed in the recent Asars patent. The McMaster system may thus be considered to have a relatively high level of input radiation (radiation directly from the X-ray source, which is of generally higher intensity and penetrating potential than portable neutron sources) and a relatively low level of internal intensification or amplification in comparison with multi-stage cameras such as that disclosed in the Asar patent. Such systems are advantageous for certain applications, and such single stage television cameras are less expensive and complex than multi-stage, very low-light- level cameras.

The Asars system employs a phosphor screen to provide a large field of view of appropriate resolution and detail, the phosphor screen serving to generate scintillations of light as the screen receives gamma radiation derived from a neutron source. The light scintillations on the screen are detected and intensified through the sensitive, multi-stage SEC camera tube. To provide adequate light amplification, the camera tube employs several stages of image intensification, including an initial image intensifier tube section and an intermediate image intensifying section. As will be understood by those in the art, sophisticated low-light level cameras such as that employed in the Asars system are highly complex and expensive.

From Kerntechnik, Vol. 19, No. 12, December 1977, pages 530 - 533, a neutron radiography system is known using TV imaging technics and having the features of the preamble of claim 1. The described system uses a Cf-252 thermal neutron source together with an image recording system consisting of an object-neutron scintillator, an image intensifier, a TV camera and an integration time control system. The resulting image of the object under examination is displayed on a TV monitor. The neutron scintillator is of a LiF/ZnS type but little constructional detail is given. The useful thermal flux density on the scintillator is 10⁴ cm⁻² s⁻¹. However, since the image recording system has to use an image intensifier in addition to the TV camera, high levels of noise and spurious background signals are introduced which obscure the image of such radiographic systems when used for recording low energy levels received from soft neutrons.

Further methods of recording neutron images are discussed in US-P-3,891,852 (Bollen et al.). Accordingly, e. g. an intensifying screen containing a gadolinium or lithium compound that flouresces when struck by X-rays is imagewise irradiated with neutrons. The fluorescent light pattern resulting from the impact of the neutrons on the screen is subjected thereafter onto a photographic material.

In EP-A-0150 863, a neutron converter is disclosed comprising a lithium compound mixed with rubber, affixed to an aluminium plate.

The present system is intended to provide a radiographic television display with a relatively lower cost and less complex camera system, while at the same time providing very high sensitivity to low radiation levels. In particular, it is intended to provide a radiographic system sensitive to "soft" or thermal neutron radiation, i. e., radiation from which the higher energy neutron and gamma rays have been removed, as may be obtained from portable radiographic generator systems such as that disclosed in U. S. Patent No. 4,300,054, issued November 10, 1981, to W. E. Dance et al, The system of the 4,300,054 patent employs a modulator fluid and filter for attenuating the hard gamma radiation from energy produced by a radiation generator tube. There is a need, particularly in the inspection of aircraft and other components by lower power, non-isotopic radiation sources, for an efficient television radiographic display means wherein a high resolution image is produced for convenient viewing. In such systems, radioactive isotopes as radiographic sources are not employed, eliminating the hazards and inconveniences entailed in the transportation and storage of such materials.

It is the object of the present invention to provide a new and improved radiographic imaging system, in which an alternative and more practical implementation of the radioluminescent screen structure described in the "Kerntechnik" article, is provided, which provides protection of the phosphorescent means, while at the same time providing possibility of a strong support.

This object is solved with an apparatus in accordance with claim 1.

It is a further advantage of the present invention to provide an imaging system which is sensitive to relatively low levels of radiation, including thermal neutron radiation free of any substantial gamma radiation. A still further object is to provide such a system which is operable to produce images of high resolution derived from thermal neutron radiation of, for example at least about 100 neutrons per square cm. per second and X-rays of low and very high levels.

Yet another advantage is to provide such an imaging system which is usable to provide high resoluton television images, and which can provide such images derived from shadowgraphs produced by both neutron and X-radiation.

A further advantage is to provide such an imaging system in which highly complex, low-light-level television cameras with multiple stages of intensification are not required, yet which provides an overall radiographic sensitivity comparable to or greater than such prior systems.

Yet another advantage is to provide such a system in which the television image produced is free of any substantial noise and distortion, wherein highly detailed images may be displayed permitting accurate inspection of components for small cracks, voids, fissures, and other similar faults.

Yet another advantage is to provide such an imgaing system which is of practicable, relatively straightforward and inexpensive construction, permitting convenient portability.

Other advantages will be apparent from the specification and claims and from the accompanying drawing illustrative of the invention.

In the drawings:
- Fig. 1: is a partially diagrammatic, sectional view of the radiographic imaging system;
- Fig. 2: is a diagrammatic representation of the video tube, in combination with the beam blanking, video processing, and video monitoring circuitry.

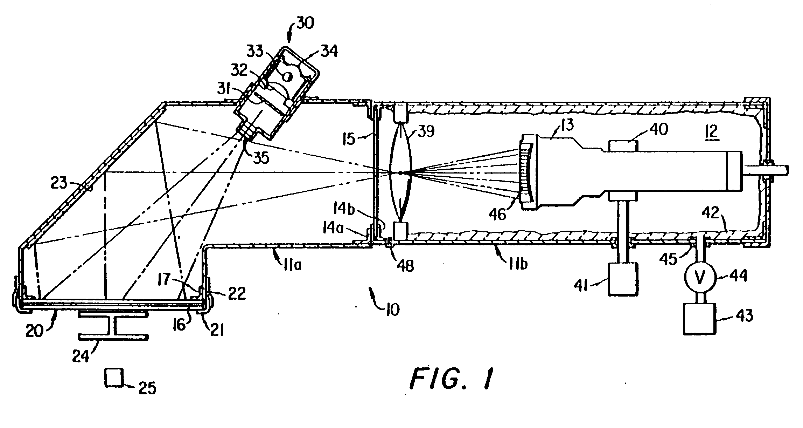

With initial reference to Fig. 1, radiographic system 10 comprises a housing consisting of first and second segments 11A and 11B. As will be understood more fully from the discussion, the first housing 11A is closed to prevent the entry of light, and the second housing, in addition to being closed, defines a substantially gas impervious chamber 12. The second housing segment 11B is of elongated configuration, and is of a sufficiently large diameter to accommodate a low-light-sensitive television camera 13. Camera 13 is mounted (by internal spiders or other mounting means, not shown) coaxially within the housing segment 11B, and with its optical input 46 directioned toward the first housing segment 11A. The camera 13 is a beam scanning camera having a semi-conductor target screen, and is suitably of the silicon intensified camera type (SIT); or alternatively, other electronic scanning cameras may be employed such as the secondary emission charged coupled device (CCD), or charge injected device (CID) types. An example of a commercially available silicon intensified camera is manufactured by Arvin Diamond Corporation company as Model No. 6073B.

The first and second housing segments 11A, 11B are connected by means such as flanges 14A, 14B affixed within abutting portions of the respective housings bolted or otherwise connected. A transparent, suitable glass plate 15 is sealingly mounted across an open end of the second housing segment 11B in front of the camera 13 permitting the passage of light to the camera input screen 46, as will be described in more detail hereinbelow. The first housing segment 11A is preferably generally L-shaped, having a perpendicularly facing window 16 at its end opposite to the second housing segment 11B.

A flange 17 is mounted peripherally within the opening 16 and a radioluminescent screen structure 20 is fitted within the opening 16 against the internally mounted flange 17. An outer molding frame member 21 is detachably affixed to the housing segment 11A around the opening 16, the housing being suitably provided with latch mechanisms 22 permitting convenient fastening of the frame member 21 against the radioluminescent or phosphorescent imaging screen 20 which is, in turn, in intimate contact with the internal molding 17, whereby extraneous light is kept from the housing segment 11A. At the end of the housing segment 11A above the opening 16, a mirror 23 is mounted extending along a plane skewed by 45 degrees from the longitudinal axis of the housing and from an axis perpendicular to the plane of the screen structure 20, whereby images produced on the radioluminescent screen 20 are reflected by the mirror along the longitudinal axis of the housings 11A, 11B, and toward the camera 13. A workpiece 24 is positioned closely adjacent the radioluminescent screen 20 between the screen 20 and a source of radiation 25, the source 25 being a source of thermal neutron radiation, preferably emitted from essentially a point source, for providing as sharp as possible a shadowradiograph upon the radioluminescent screen 20. Preferably, as suggested above, the source 25 may be a non-isotopic, portable neutron generator as disclosed in U. S. Patent 4.300,054, which produces a collimated beam of thermal neutrons directioned toward the screen.

A test pattern projector 30 is mounted above the screen within the first housing segment 11A and is directioned to form a projected image upon the inner side of the radioluminescent screen 20. As will be understood from the description of the operation of the system, the system preferably includes such a projection system because at low flux levels, the very low levels of scintillations produced on the screen 20 are not sufficient to permit adjustment of the focus current and target bias voltages during operation of the camera. The test pattern projected on the screen is of sufficient intensity to permit convenient adjustment of both focus current and bias voltage, for subsequent use with the radiation source (without the projected image). The test pattern projector 30 includes a test pattern transparency 31, a condensing lens 32 being positioned between the transparency and a projection lamp 33 positioned in front of a projection mirror 34. The projection lens system 35 is directioned toward the radioluminescent screen 20. The housing of the test pattern projector 30 is removably affixed through an opening formed in the upper portion of the first bousing segment 11A by means of a flange structure 36, which may be bolted to the housing.

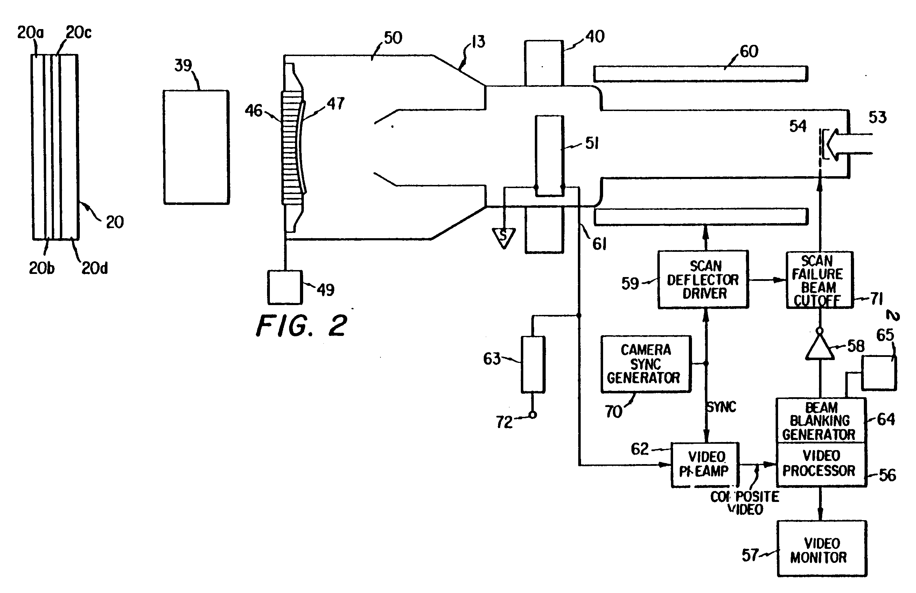

The television camera 13 in the preferred embodiment of the system is cooled to reduce to the greatest extent any possible noise. As shown diagrammatically in Fig. 1, the tube 13 is preferably fitted within a cooling ring 40, the cooling ring 40 being mounted circumferentially of the target section of the camera, as will be more fully described hereinbelow with reference to Fig. 2, for maintaining the target preferably at temperatures in the range of -15 to -40°C. The cooling ring 40 may comprise an annulus through which cryogenic, liquid nitrogen is circulated from a source, represented at 41, external of the housing segment 11B. Alteratively, the cooling ring 40 may comprise a Peltier junction device powered electrically. The second housing segment 11b is preferably insulatd by insulation 42 formed on its inner wall surfaces. The interior 12 of the second housing segment 11b is preferably maintained as a moisture-free environment to prevent condensation upon the television tube 13, and a lens structure 39 positioned between the television tube input and the glass plate 15, as will be more fully described hereinbelow. For preventing condensation on the camera 13 or lens system 39, the interior of the second housing segment 11B may be evacuated, or prefarably, charged with a drying agent such as nitrogen from a source indicated as 43. Suitably, the nitrogen source 43 or any other dry, non-inflammable, electrically insulating gas communicates through valve 44 and through a fitting 45 being mounted within a suitable opening formed in the wall of the housing segment with an outlet 48, which is, in turn, incorporated in the opposite end of the housing segment 11B. Prior to the use of the system 10, outlet 48 is opened and nitrogen or other gas is permitted to flow through the inlet formed through fitting 45 for a period of time sufficient to remove most of the air and moisture from within the housing chamber 12 and to charge the chamber with nitrogen. Subsequently, the chamber 12 is pressurized to approximately 415 mbar (6 psi), after which valve 44 is closed. It has been found in our experiments that such a charge is sufficient for preventing condensation on the camera tube 13 and optics 39 over an extended period of time of, for example, several months, with no need for further charge.

With reference now to Fig. 2, the optics and circuitry of the system are shown diagrammatically in somewhat greater detail. An important feature of the invention is the combination of a high output radioluminescent screen structure 20 with a sensitive, low-noise camera 13 upon which light scintillations are gatherd and integrated internally by means of target blanking. It should be understood that, in contrast with prior systems, target blanking is not employed for increasing image intensity, but is instead employed for statistical purposes, i. e., for accumulating sufficient scintillation information to form a radiographic image between electron beam raster scans of the target to provide an adequate image. The light emitting, radioluminescent screen structure 20 includes an outer plate 20A of a material as transparent as possible to the radiation employed, but which is opaque to light. It is typically of aluminum, or of another material of a low "Z" number and low thermal neutron absorption characteristics. For convenience, a sealing layer 20B of aluminum foil is suitably employed adjacent the aluminum plate 20A to protect the phosphor layer 20C. The phosphorous layer 20C is suitably coated or deposited on a substrate 20D, which is of a transparent material such as glass. Alternatively, the phosphor layer 20C can be deposited on the interior surface of the initial, outer plate 20A, with a protective glass plate 20D.

The system differs form prior systems in its use of a relatively high intensity radioluminescent layer 20C on the imaging screen, which permits the use of a relatively lower gain camera 13, and in the integration of scintillations on the target during the blanking periods. Preferably, the phosphor layer consists of a thin layer of a non-radioactive isotope of lithium in lithium fluoride, suitably combined with zinc sulfide, deposited on the substrate. In prior art systems, lithium-based phosphor layers have been used for gross, low resolution imaging purposes, but they inherently produce light scattering and diffusion when subjected to radiation, which has in the past prevented their use in normal or high resolution imaging. In the present system, the prior difficulties are eliminated by the use of a very thin layer of the material, of about 0.63 mm (.025 inches) or less, and preferably of about 0.5 mm (.020 inches) or less. The lithium powder is mixed with a lithium binder material. Suitably, the neutron-to-light radiophosphorescent convert material consists of a mixture of lithium fluoride and zinc sulfide powders mixed with a binder material , preferably one which also contains lithium, or the powder is otherwise held in place on the substrate by a thin transparent coating material. It is desirable to limit the quantity of binder materials to approximately 10-15% by weight for providing maximum light output. Although various methods are known and utilized for laying materials in a thin film on a substrate, e. g. thin film chromotography, colloidal suspension in a settling tank etc., a recommended method is to form a suspension of the powder mixture in liquid solution containing a small quantity of the binder materials and then apply the resulting slurry to the substrate by "painting" or loading the substrate with the material, and then drawing a blade or knife-like edge such as a "doctor's bar" across the surface to spread the material uniformly cross the substrate. In order to maintain uniform thickness, the substrate must be flat and rigidly attached to a machined flat surface. Coating thickness can be controlled to within 0.025 mm (.001'') using this technique. As previously suggested, thin coating of, for example, about 0.25 to 0.5 mm (.010 to .020 inches) have been satisfactory, and peferably 0.3 to 0.63 mm (.012'' to .025'') coatings are employed.

The neutron particles react with the lithium to produce alpha particles by nuclear conversion of the lithium molecule, and the alpha particle reacts with the zinc sulfide to produce a scintillation of light energy. The lithium fluoride component is thus a conversion element for converting radiation to alpha particles, and the zinc sulfide component is a light producing element for producing light from alpha energy for laying the material in a thin film on the substrate at a nominal thickness of 0.25 to 0.5 mm (.01 inches to .02 inches).

The phosphor radioluminescent layer 20C is of importance as a radiation conversion material for converting the radiation received into low level, visible light radiation.

Lens structure 43 is an objective lens structure positioned to form an image of the phosphor layer 20C on the input fiber optic screen 46 of the camera. The camera tube 13 itself includes a fiber optic based "lens" input section 46 having a concave, inner photo imaging layer 47 which converts light derived from the scintillations into electron energy which is accelerated through an intensifying section 50 to the camera target 51 by means of an electric potential field. The target 51 comprises a semiconductor, suitably silicon structure. Cooling ring 40 preferably maintains the target at a low temperature of -15°C to -40°C, sufficient to minimize backgroung noise and distortion during blanking periods. As is generally known by those in the art, such tubes 13 incorporate a raster scanning section, represented diagrammatically at 53, and typically employ a blanking grid 54 for imparting a blanking bias preventing scanning of the target 51 in the event of failure of the raster scanning circuitry (for the purpose of preventing damage to the target 51 by extended bombardment of a fixed location on the target 51 by the electron beam). The camera assembly typically includes an internal circuitry for effecting the raster scanning, including the raster generator and scanning circuitry. Such interal raster scanning circuitry is generally operated in response to external synchronizing or triggering signals to provide television scanning of the target by the electron beam. A video or picture processing unit 56, suitably a unit of the type manufactured by the Quantex Corporation as Model No. DS-20, is employed for generating timing and synchronization signals, and for storing, processing and providing playback of video displays. Its output is fed to a video monitor unit 57 for permittng monitoring of images accumulated through integration of one or more successive frames of scanning. An internal timing and control circuit in the beam blanking generator portion of the picture processor 56 generates timing signals which are logic signals of a selected time period. The logic signals are fed through a logic driver 58, suitably an open collector TTL driver, employed to increase the power of the blanking signals and invert it prior to its application to the tube scan failure beam cutoff circuit 71, and subsequently to the camera 13. The beam blanking generator portion 57 of the processing circuitry may be adjusted to vary the blanking period; during application of a blanking signal to the grid 54, the electron scanning beam is biased off. During the blanking period electron charge is stored in the silicon target in a pattern corresponding to the image which is scintillating on the radiofluorescent screen.

At the completion of the blanking time interval, the electron beam is unbiased and allowed to scan the target surface 51 as steered by the deflection driver 59, including the raster generator, which is typically connected to deflection yokes 60 external of the tube. The deflection driver 59 is synchronized with an output signal from the beam blanking generator 57 and with the storage of video information derived from the target potential output 61. The target output, derived from 61, is amplified by a video preamp unit 62 and fed to the video processor 56. A load resistor 63 connected between the target output 51 and a target power supply imparts a bias to the target.

The video processor 56 serves to accumulate frames generated over a period of time during the non-blanking periods and provides an output to the video monitor 57 which is of high resolution, sufficient to permit evaluation of finely detailed internal faults in the specimens under examination. The image processor thus periodically activates the electron beam generator, reads resulting images, and processes the images for integrating sequential frames and averaging the frames, for improving clarity, and then continually reads out the processed image to the monitor. Typically, the electron scanning beam is blanked for a large portion of the inspection time. For example, the period of image storage may be in the order of 100 times greater than the scanning period; in some low level radiation inspection, there may be even longer periods of storage relative to the scanning cycle period, depending upon the scintillation output.

The very low levels of energy produced by scintillations on phosphor screens from thermal neutron radiaton or low level X-radiation have not been previously employed for the accumulation of statistical information on a semiconductor target during blanking periods, and the low level of energies presents problems with respect to the biasing and focusing of the camera tube 13. For this reason, the test pattern projector 30 (Fig. 1) is initially employed for adjusting the bias.

Thus, an important feature of the apparatus described is its ability to store and accumulate statistically significant scintillation information on the target 51 within the tube 13 wherein the electron charge storage pattern builds up on the semiconductor target screen from individual scintillation events over a period of time until a statistically satisfactory image may be scanned, rather than being derived from external circuitry. This permits the use of a camera tube 13 which is of relatively inexpensive, rigid construction in comparison with those employing multiple intensification sections, and thereby minimizes noise and distortion which typically results multiple stages of light intensification. Thus, the combination of the high output phosphor screen with the blanking of the target scanning produce high resolution images with components of moderate cost and complexity. An important advantage of the apparatus is its ability to produce clear images from low levels of radiation and its ability to produce images derived from both X-ray and N-ray sources without changing the internal configuration of the apparatus, that is, without changes of the structure of the phosphor screen of the camera, etc. Extremely clear images are obtained at very low radiation levels. In our experiments, satisfactory high resolution radiographic images have been produced, derived from thermal neutron radiation levels, for example, about 100 neutrons per square cm. per second, and with X-radiation of very low and very high levels (e. g., from 40 KeV, at 0.5 mA, at 76 cm (30 inches), to 10 MeV). Moreover, images are obtained from such various radiation sources without mechanical modification of the camera lens system, or screen.

The test pattern projector 30, in combination with the radioluminescent screen 20 facing inwardly within a closed housing segment 11A, permits accurate, convenient focusing, both mechanically, i. e., by positioning lens 43 relative to the camera 13, and by adjustment of the target bias and camera electronic focus, prior to actual radiography operations.

While only one embodiment of the invention, together with modifications thereof, has been described in detail herein and shown in the accompnaying drawing, it will be evident that various further modifications are possible in the arrangement and construction of its components without departing from the scope of the invention as claimed.

## Claims

1. A radiographic inspection system (10) comprising:
a) radiation generating means (25) for irradiating an object (24);
b) a radioluminescent screen structure (20) having a lithium-based phosphorescent means (20c) being mounted on a supporting means (20d) and being positioned between said camera means (13) and said object (24), for producing a shadograph or transmission scintillation pattern derived from radiation through and around the object (24), said phosphorescent means (20c) comprises a mixture of lithium fluoride and a radiation conversion component;
c) a television camera means (13) for producing a television image of the scintillation pattern, said television camera means (13) having a semiconductor target means (51);
d) control means (71) for interrupting raster scanning of said target means (51) for periods of time sufficient to form a charge pattern on said target means (51) corresponding to a scintillation shadograph on said radioluminescent screen structure (20); characterized in that
e) said radioluminescent screen structure (20) further comprises an outer plate means (20a) of a material which is as transparent as possible to said radiation and which is opaque to visible light, one side of which faces said object (24) to be inspected,
f) said lithium-based phosphorescent means (20c) is sandwiched between the other side of said outer plate means (20a) and said supporting means (20d); and
g) said supporting means (20d) is transparent to light scintillations emitted from said phophorescent means (20c).

2. The inspection system of claim 1, wherein said phosphorescent means (20c) is coated or deposited on said supporting means (20d).

3. The inspection system of claim 1, wherein said phosphorescent means (20c) is deposited on said other side of said outer plate means (20a).

4. The inspection system of anyone of the preceding claims, wherein said radioluminescent screen structure (20) further comprises a sealing means (20b) being positionend between said outer plate means (20a) and said phosphorescent means (20c) to protect said phosphorescent means (20c).

5. The inspection system of anyone of the preceding claims, wherein said lithium based phosphorescent means (20c) has a thickness less than about 1 mm (0,04 inch).

6. The inspection system of anyone of the claims 1 thru 4, wherein said lithium based phosphorescent means (20c) has a thickness between about 0,25 mm (0,01 inch) and about 0,50 mm (0,02 inch).

7. The inspection system of anyone of the preceding claims, wherein said radiation conversion component is zinc sulfide.

8. The inspection system of anyone of the preceding claims, wherein said radiation generating means (25) comprises means for generating thermal neutron radiation.

9. The inspection system of claim 8, wherein said radiation generating means (25) includes a non-isotopic radiation generator means (25).

10. The inspection system of claim 8, wherein said radiation generating means (25) includes a means for terminating the generation of neutron radiation.

11. The inspection system of claim 8, wherein said radiation generating means (25) further includes positioning means for positioning the radiation generating means (25) in alignment with the object (24) and said radioluminescent screen structure (20), the object (24) being aligned between the radiation generating means (25) and the radioluminiscent screen structure (20).

12. The inspection system of claim 11, wherein said positioning means includes directionable boom means for positioning the radiation generating means in alignment with the object (24) and said phosphorescent means (20c).

13. The inspection system of anyone of the preceding claims, characterized by further comprising processing means (56) for the accumulation of a number of target frames for processing information therefrom so as to produce a television display corresponding to said shadograph scintillation pattern.

14. The inspection system according to anyone of the preceding claims, further comprising means (43, 44) for charging the interior of the housing with a drying agent.

15. The inspection system of claim 14, wherein the drying agent is nitrogen or SF6.

## Patentansprüche

1. Ein radiographisches Kontrollsystem (10) mit:
a) einer Strahlungs-Erzeugungsvorrichtung (25) zum Bestrahlen eines Objektes (24);
b) einer radiolumineszenten Schirmstruktur (20), die eine auf Lithium basierende, phosphoreszierende Vorrichtung (20c) aufweist , die auf einer Tragevorrichtung (20d) befestigt ist und die zwischen einer Kameravorrichtung (13) und dem Objekt positioniert ist, zur Erzeugung eines Schattenbildes oder eines Transmissions-Szintillationsmusters, das von der Strahlung durch und um das Objekt (24) herum abgeleitet worden ist, wobei die phosphoreszierende Vorrichtung (20c) eine Mischung aus Lithiumfluorid und einer Strahlungs-Konversionskomponente umfaßt;
c) einer Fernsehkamera (13) zur Erzeugung eines Fernsehbildes des Szintillationsmusters, wobei die Fernsehkameravorrichtung (13) eine Halbleiter-Zielvorrichtung (51) aufweist;
d) einer Steuervorrichtung (71) zur Unterbrechung der Rasterabtastung der Zielvorrichtung (51) über Zeitperioden hinweg, die ausreichend lang sind, um ein Ladungsmuster auf der Zielvorrichtung (51) zu errichten, das einem Szintillations-Schattenbild auf der radiolumineszenten Schirmstruktur (20) entspricht; dadurch gekennzeichnet, daß
e) die radiolumineszente Schirmstruktur (20) des weiteren eine äußere Plattenvorrichtung (20a) aus einem Material aufweist, das im Hinblick auf die Strahlung so transparent wie möglich und im Hinblick auf sichtbares Licht undurchlässig ist, wobei eine Seite von ihr dem zu untersuchenden Objekt (24) gegenüber liegt;
f) die auf Lithium basierende phosphoreszierende Vorrichtung (20c) zwischen der anderen Seite der äußeren Plattenvorrichtung (20a) und der Tragevorrichtung (20d) liegt; und
g) die Tragevorrichtung (20d) im Hinblick auf Lichtszintillationen transparent ist, die von der phosphoreszierenden Vorrichtung (20c) emittiert worden sind.

2. Das Kontrollsystem nach Anspruch 1, worin die phosphoreszierende Vorrichtung (20c) auf der Tragevorrichtung (20d) aufgeschichtet oder auf ihr abgeschieden ist.

3. Das Kontrollsystem nach Anspruch 1, worin die phosphoreszierende Vorrichtung (20c) auf der anderen Seite der äußeren Plattenvorrichtung (20a) abgeschieden ist.

4. Das Kontrollsystem nach einem der vorigen Ansprüche, worin die radiolumineszente Schirmstruktur (20) des weiteren eine Dichtungsvorrichtung (20b) umfaßt, die zwischen der äußeren Plattenvorrichtung (20a) und der phosphoreszierenden Vorrichtung (20c) positioniert ist, um die phosphoreszierende Vorrichtung (20c) zu schützen.

5. Das Kontrollsystem nach einem der vorigen Ansprüche, worin die auf Lithium basierende phosphoreszierende Vorrichtung (20c) eine Dicke von weniger als ungefähr einem Millimeter (0,04 Inch) aufweist.

6. Das Kontrollsystem nach einem der Ansprüche 1 - 4, worin die auf Lithium basierende, phosphoreszierende Vorrichtung (20c) eine Dicke zwischen ungefähr 0,25 mm (0,01 Inch) und ungefähr 0,5 mm (O,02 Inch) aufweist.

7. Das Kontrollsystem nach einem der vorigen Ansprüche, worin die Strahlungs-Konversionskomponente Zinksulfid ist.

8. Das Kontrollsystem nach einem der vorigen Ansprüche, worin die Strahlungs-Erzeugungsvorrichtung (25) eine Vorrichtung zum Erzeugen thermischer Neutronen ist.

9. Das Kontrollsystem nach Anspruch 8, worin die Strahlungs-Erzeugungvorrichtung (25) eine nicht isotopische Strahlungs-Generatorvorrichtung (25) enthält.

10. Das Kontrollsystem nach Anspruch 8, worin die Strahlungs-Erzeugungsvorrichtung (25) eine Vorrichtung zum Beenden der Erzeugung der Neutronenstrahlen enthält.

11. Das Kontrollsystem nach Anspruch 8, worin die Strahlungs-Erzeugungsvorrichtung (25) des weiteren eine Positioniervorrichtung enthält, zum Positionieren der Strahlungs-Erzeugungsvorrichtung (25) in Ausrichtung mit dem Objekt (24) und der radiolumineszenten Schirmstruktrur (20), so daß das Objekt (24) mit der Strahlungs-Erzeugungvorrichtung (25) und der radiolumineszenten Schirmstruktur (20) ausgerichtet ist.

12. Das Kontrollsystem nach Anspruch 11, worin die Positioniervorrichtung eine ausrichtbare Boomvorrichtung enthält, zum Positionieren der Strahlungserzeugungsvorrichtung in Ausrichtung mit dem Objekt (24) und der phosphoreszierenden Vorrichtung (20c).

13. Das Kontrollsystem nach einem der vorigen Ansprüche, dadurch gekennzeichnet, das es desweiteren eine Verarbeitungsvorrichtung (56) umfaßt, zum Sammeln einer Anzahl von Zielrahmen, um aus ihnen Informationen zu erarbeiten, um eine Fernsehanzeige zu erzeugen, die dem Schattenbild-Szintillationsmuster entspricht.

14. Das Kontrollsystem nach einem der vorigen Ansprüche, das desweiteren eine Vorrichtung (43, 44) zum Auffüllen des Inneren des Gehäuses mit einem Trockenmittel umfaßt.

15. Das Kontrollystem nach Anspruch 14, worin das Trockenmittel Stickstoff oder SF6 ist.

## Revendications

1. Système d'inspection radiographique (10), comprenant :
a) un moyen de production de rayonnement (25) pour irradier un objet (24);
b) une structure d'écran radioluminescente (20) présentant un moyen phosphorescent à base de lithium (20c), monté sur un moyen de support (20d) et disposé entre ledit moyen de caméra (13) et ledit objet (24), pour produire un graphique d'ombre ou un modèle de scintillation de transmission dérivé d'un rayonnement produit sur et autour de l'objet (24), ledit moyen phosphorescent (20c) comprenant un mélange de fluorure de lithium et un composant de conversion de rayonnement;
c) un moyen de caméra de télévision (13) pour produire une image de télévision du modèle de scintillation, ledit moyen de caméra de télévision (13) présentant un moyen cible à semiconducteur (51);
d) un moyen de commande (71) pour interrompre un balayage tramé dudit moyen cible (51) pendant des périodes de temps suffisantes pour former un modèle de chargement sur ledit moyen cible (51), correspondant à un graphique d'ombre de scintillation sur ladite structure d'écran radioluminescente (20); caractérisé en ce que :
a) ladite structure radioluminescente (20) comprenant en outre un moyen formant plaque extérieure (20a) réalisé en un matériau qui est aussi transparent que possible audit rayonnement et qui est opaque par rapport à ladite lumière visible, dont un côté est tourné vers ledit objet (24) à inspecter,
f) ledit moyen phosphorescent à base de lithium (20c) est pris en sandwich entre l'autre côté dudit moyen formant plaque extérieure (20a) et ledit moyen de support (20d); et
g) ledit moyen de support (20d) est transparent face à des scintillations émises par ledit moyen phosphorescent (20c).

2. Système d'inspection selon la revendication 1, dans lequel ledit moyen phosphorescent (20c) est revêtu ou déposé sur ledit moyen de support (20d).

3. Système d'inspection selon la revendication 1, dans lequel ledit moyen phosphorescent (20c) est déposé sur ledit outre côté dudit moyen formant plaque extérieure (20a).

4. Système d'inspection selon l'une quelconque des revendications précédentes, dans lequel ladite structure d'écran radioluminescente (20) comprend en outre un moyen d'étanchéisation (20b) qui est disposé entre ledit moyen formant plaque extérieure (20a) et ledit moyen phosphorescent (20c), pour protéger ledit moyen phosphorescent (20c).

5. Système d'inspection selon l'une quelconque des revendications précédentes, dans lequel ledit moyen phosphorescent à base de lithium (20c) présente une épaisseur inférieure à à peu près 1 mm (0,04 pouce).

6. Système d'inspection selon l'une quelconque des revendications 1 à 4, dans lequel ledit moyen phosphorescent à base de lithium (20c) présente une épaisseur comprise entre à peu près 0,25 mm (0,01 pouce) et à peu près 0,50 mm (0,02 pouce).

7. Système d'inspection selon l'une quelconque des revendications précédentes, dans lequel ledit composant de conversion de rayonnement est du sulfure de zinc.

8. Système d'inspection selon l'une quelconque des revendications précédentes, dans lequel ledit moyen de production de rayonnement comprend un moyen pour produire un rayonnement de neutron thermique.

9. Système d'inspection selon la revendication 8, dans lequel ledit moyen de production de rayonnement (25) comprend un moyen de production de rayonnement non-isotopique (25).

10. Système d'inspection selon la revendication 8, dans lequel ledit moyen de production de rayonnement (25) comprend un moyen pour mettre fin à la production de rayonnement de neutron.

11. Système d'inspection selon la revendication 8, dans lequel ledit moyen de production de rayonnement (25) comprend en outre un moyen de positionnement pour disposer le moyen de production de rayonnement (25) en alignement avec l'objet (24) et ladite structure d'écran radioluminescante (20), l'objet (24) étant aligné entre le moyen de production de rayonnement (25) et la structure d'écran radioluminescente (20).

12. Système d'inspection selon la revendication 11, dans lequel ledit moyen de positionnement comprend un moyen formant perche orientable, pour disposer le moyen de production de rayonnement en alignement avec l'objet (24) et ledit moyen phosphorescent (20c).

13. Système d'inspection selon l'une quelconque des revendications précédentes, caractérisé par la fait de comporter en outre un moyen de traitement (56) pour l'accumulation d'un nombre de trames cibles, en vue de traiter une information à partir de ce dernier, de manière à former un affichage de télévision correspondant audit modèle de scintillation de graphique d'ombre.

14. Système d'inspection selon l'une quelconque dos revendications précédentes, comportant en outre un moyen (43, 44) pour charger l'intérieur du boîtier avec un agent de séchage.

15. Système d'inspection selon la revendication 14, dans lequel l'agent de séchage est de l'azote ou du SF6.
